# EUROPEAN PATENT SPECIFICATION

(11) **EP 1 388 715 B1**
(45) Date of publication and mention of the grant of the patent: **21.03.2007**
(21) Application number: 03018051.7
(22) Date of filing: 07.08.2003
(51) Int. Cl.: F24H 9/12, G05D 23/02

(54) **Device for connecting a control head to a thermostatic valve, in particular for a radiator or other air-conditioning or heating appliance**
Vorrichtung zum Verbinden eines Einstellkopfes mit einem Thermostatventil, insbesondere für einen Heizkörper oder für andere Klima- oder Heizgeräte
Dispositif pour connecter une tête de commande à une vanne thermostatique, notamment pour un radiateur ou pour d'autres appareils de conditionnement d'air ou d'appareils de chauffage

(30) Priority: 08.08.2002 IT mi20020398 U
(43) Date of publication of application: 11.02.2004
(73) Proprietor: Oliveira & Irmao S.A., 3800 Aveiro (PT)
(72) Inventor: Almeida Martins Antunes, Rogerio, Salgueiro, 3840-346 Sosa (PT)
(74) Representative: Franzolin, Luigi

(56) References cited:
- EP-A- 0 504 582
- EP-A- 1 229 416
- WO-A-98/29680
- DE-A- 1 579 976
- FR-A- 2 301 783

## Description

The present invention relates to a device for connecting a control head to a thermostatic valve, in particular for a radiator or other air-conditioning or heating appliance.

Numerous types of heating or air-conditioning appliances (in particular, radiators, etc.) forming part of centralized systems are equipped with thermostatic valves associated with respective control heads for regulating and maintaining a predetermined ambient temperature; and the thermostatic valve is normally housed in a portion of a fitting connecting the appliance to the thermal fluid circulating system. Various types of devices are known for connecting the control head to the thermostatic valve, and which normally involve inserting the fitting portion inside a seat formed in the control head, and then tightening the fitting portion inside the seat by means of a ring nut.

These devices have various drawbacks : in particular, they involve the use of threaded components, which, as is known, are fairly complex to produce, must be made of suitable material, typically metal, and are therefore heavy and expensive to produce. Moreover, to connect the knob to the fitting, the ring nut must be screwed on and tightened firmly, which are fairly awkward, time-consuming jobs possibly requiring special tools.

A device according to the preamble of claim 1 is disclosed in DE-1579976 A further similar device is disclosed in FR-2301783.

It is an object of the present invention to provide a device for connecting a control head to a thermostatic valve, in particular for a radiator or other air-conditioning or heating appliance, designed to eliminate the aforementioned drawbacks.

According to the present invention, there is provided a device for connecting a control head to a thermostatic valve, in particular for a radiator or other air-conditioning or heating appliance, as claimed in claim 1.

The device according to the invention is extremely cheap and easy to produce, requires no threaded components, and can be made of low-cost, lightweight plastic materials. Moreover, the control head is connected to the thermostatic valve quickly and easily by means of straightforward user operations requiring no tools.

An embodiment of the present invention will be described by way of example with reference to the accompanying drawings, in which:
Figure 1 shows an exploded view in perspective of a device for connecting a control head to a thermostatic valve in accordance with the present invention;
Figure 2 shows a larger-scale, partly sectioned side view of a first detail of the Figure 1 device;
Figure 3 shows a larger-scale side view of a second detail of the Figure 1 device;
Figure 4 shows a partial view of the Figure 1 device assembled.

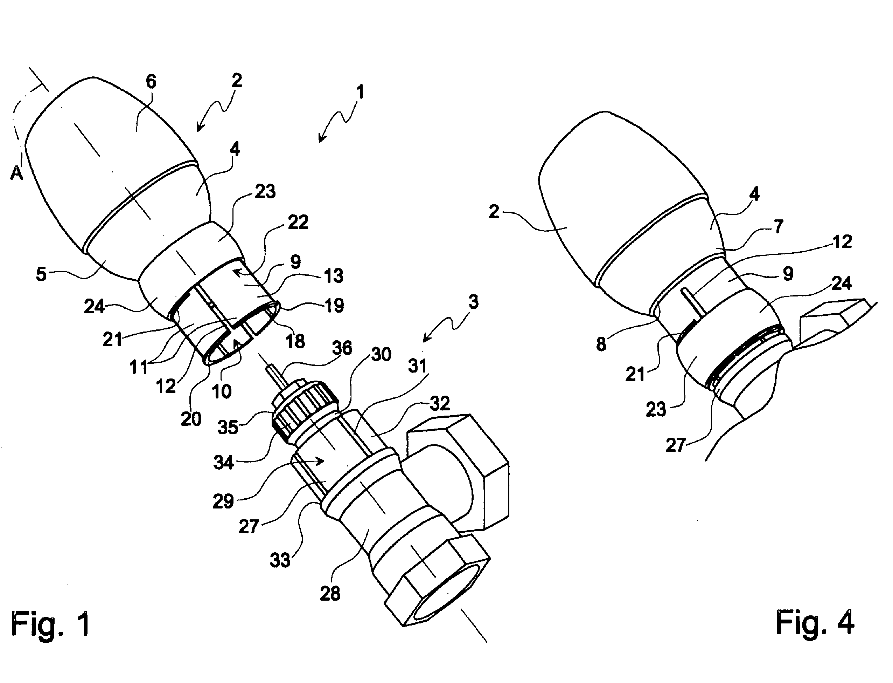

Number 1 in Figure 1 indicates as a whole a device for connecting a control head 2 to a thermostatic valve 3 of a radiator or other known air-conditioning or heating appliance (not shown).

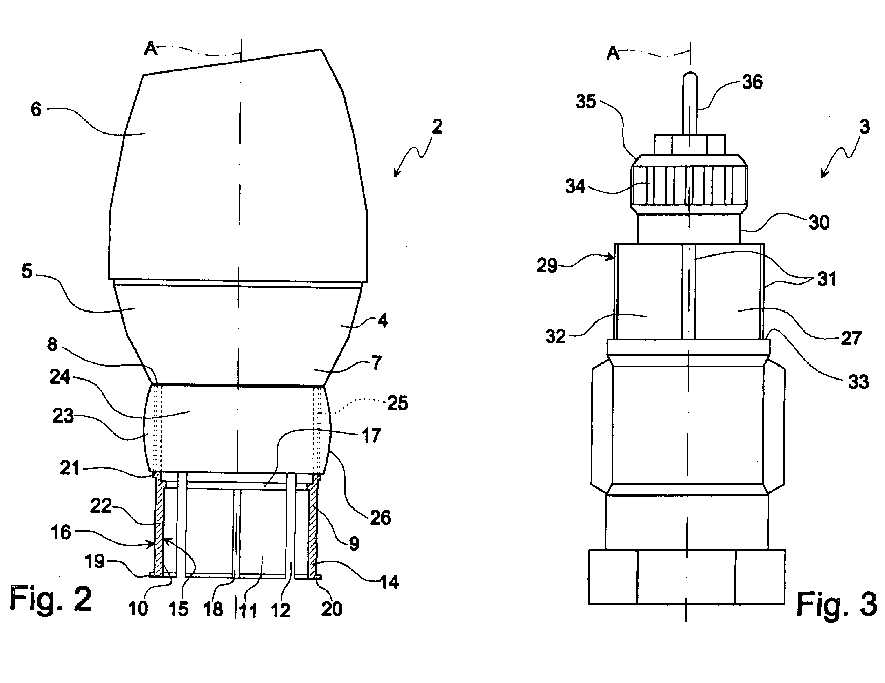

With reference also to Figures 2 and 4, control head 2 comprises a casing 4 preferably made of polymer material, and housing a known regulating mechanism (not described or shown for the sake of simplicity) cooperating, in use, with thermostatic valve 3. More specifically, casing 4 comprises a base body 5 and a knob 6 connected to rotate with respect to each other in known manner about an axis A; and, at one end 7, base body 5 comprises an annular shoulder 8, and a tubular portion 9 having a substantially cylindrical inner seat 10.

Tubular portion 9 comprises a number of longitudinal arms 11 projecting from end 7 and separated by slits 12. Arms 11, which, for example, are four in number, are arranged in a ring parallel to axis A, and form respective curved portions 13, separated by slits 12, of a wall 14 laterally defining seat 10. Portions 13 have respective inner lateral surfaces and respective outer lateral surfaces, which together define an inner lateral surface 15 of seat 10 and, respectively, an outer lateral surface 16 of tubular portion 9.

Seat 10 has a circumferential tooth 17 projecting radially from inner lateral surface 15, and which, in the example shown, is defined by a discontinuous annular projection interrupted by slits 12 and comprising separate portions formed respectively on arms 11.

Longitudinal ribs 18, parallel to axis A, also project radially from inner lateral surface 15. In the example shown, one rib 18 is provided for each arm 11.

The respective free ends of arms 11 have radially outer edges 19 defining respective separate portions of a front end edge 20 of tubular portion 9.

Outer lateral surface 16 of tubular portion 9 has at least one circumferential, radially outer projection 21 located a given distance from shoulder 8. In the non-limiting example shown, two projections 21 are formed on the outer lateral surfaces of respective diametrically opposite arms 11, though a different number of projections 21 may obviously be provided. Together with edges 19, projections 21 define a retaining seat 22 for a lock member 23.

Lock member 23 is defined by a ring 24 preferably made of polymer material, and having a substantially cylindrical inner lateral surface 25, and a convex outer lateral surface 26 possibly knurled for easy grip by the user. Ring 24 is fitted, to slide axially along axis A, to the outside, i.e. to outer lateral surface 16, of tubular portion 9.

The axial distance between projections 21 and edges 19, and the axial distance between projections 21 and shoulder 8 are substantially equal to or greater than the height, measured axially, of ring 24.

With reference to Figures 1 and 3, thermostatic valve 3 (substantially known and therefore not described in detail) comprises a tubular portion 27, which slides along axis A into seat 10, and which, for example, forms part of a T fitting 28 connecting the appliance equipped with thermostatic valve 3 to a thermal fluid circulating system.

Portion 27 comprises an outer lateral surface 29 having a circumferential groove 30 for housing tooth 17, and longitudinal grooves 31 (four in the example shown) for receiving ribs 18.

More specifically, portion 27 comprises a substantially cylindrical sleeve 32, on which grooves 31 are formed, and which is connected to fitting 28 by an annular shoulder 33; and an end head 34 having a front lead-in portion 35, and from extends axially a pin 36 cooperating, in use, with the internal regulating mechanism of control head 2. Groove 30 is formed between sleeve 32 and end head 34.

Control head 2 is connected to thermostatic valve 3 as follows.

Lock member 23 is initially in a release position (shown in Figures 1 and 2), in which lock member 23 is outside retaining seat 22 and, in particular, located between shoulder 8 and projections 21; and portion 27 can be slid freely inside seat 10.

Portion 27 is inserted along axis A into seat 10, so that ribs 18 slide inside grooves 31; when front lead-in portion 35 encounters tooth 17, arms 11 are flexed apart to enable tooth 17 to engage groove 30; and insertion of portion 27 is completed when shoulder 33 comes to rest on front edge 20 of tubular portion 9.

At this point, lock member 23 is clicked into retaining seat 22 by a translatory axial movement of lock member 23 along axis A; lock member 23 is moved past projections 21 into an engaged position (Figure 4) in which lock member 23 is inserted inside retaining seat 22, between projections 21 and edges 19, and grips arms 11 about portion 27 to secure portion 27 inside seat 10.

More specifically, in the engaged position, lock member 23 keeps tooth 17 and groove 30 in a coupled position in which tooth 17 and groove 30 cooperate to secure portion 27 axially to seat 10.

In the engaged position, lock member 23 also keeps ribs 18 and grooves 31 in a coupled position in which ribs 18 engage grooves 31 to secure portion 27 angularly to seat 10.

Control head 2 is detached from thermostatic valve 3 by simply restoring lock member 23 to the release position, again by means of a straightforward axial movement of lock member 23, and by extracting portion 27 from seat 10.

## Claims

1. A device (1) comprising a control head (2), a thermostatic valve (3) and a lock member (23), in particular for a radiator or other air-conditioning or heating appliance, the control head (2) having a tubular portion (9) and a seat (10) formed in the tubular portion (9) ; the thermostatic valve (3) having a valve portion (27) insertable along an axis (A) inside the seat (10); and the lock member (23) being the movable along said axis (A) to grip the valve portion (27) inside the seat (10) and defined by a ring (24) fitted in axially sliding manner to the outside of said tubular portion (9); the lock member (23) being provided to secure the valve portion (27) inside the seat (10); the device being **characterized in that** the tubular portion (9) is provided with a retaining seat (22) defined by at least one circumferential, radially outer projection (21) formed on an outer lateral surface (16) of said tubular portion (9), and **in that** the ring (24) is movable along the axis (A) past the projection (21) to click into the retaining seat (22).

2. A device as claimed in Claim 1, **characterized in that** said tubular portion (9) comprises a number of longitudinal arms (11) projecting from one end (7) of the control head (2) and separated by slits (12).

3. A device as claimed in Claim 2, **characterized in that** said arms (11) are arranged in a ring parallel to said axis (A), and form respective separate curved portions (13) of a wall (14) defining said seat (10).

4. A device as claimed in one of the foregoing Claims, **characterized in that** said lock member (23) is movable along said axis (A) to selectively assume a release position, in which the lock member (23) is outside the retaining seat (22) and the valve portion (27) can be slid freely inside the seat (10), and an engaged position, in which the lock member (23) is inserted inside the retaining seat (22) and the valve portion (27) is secured to the seat (10).

5. A device as claimed in Claim 4, **characterized in that** said valve portion (27) and said seat (10) have respective first members (30, 17) cooperating to secure the valve portion (27) axially inside the seat (10); in said engaged position, the lock member (23) keeping said first members (30, 17) in a coupled position wherein the valve portion (27) is secured axially to the seat (10).

6. A device as claimed in Claim 5, **characterized in that** said first members comprise a circumferential groove (30) formed on an outer lateral surface (29) of the valve portion (27); and a circumferential tooth (17) projecting radially from an inner lateral surface (15) of the seat (10) to engage said groove (30).

7. A device as claimed in one of Claims 4 to 6, **characterized in that** said valve portion (27) and said seat (10) have respective second members (31, 18) cooperating to lock the valve portion (27) angularly inside the seat (10); in said engaged position, the lock member (23) keeping said second members (31, 18) in a coupled position wherein the valve portion (27) is secured angularly to the seat (10).

8. A device as claimed in Claim 7, **characterized in that** said second members comprise longitudinal ribs (18) projecting from an inner lateral surface (15) of the seat (10) to engage respective longitudinal grooves (31) formed on an outer lateral surface (29) of the valve portion (27).

## Patentansprüche

1. Vorrichtung (1), umfassend einen Steuer- bzw. Regelkopf (2), ein Thermostatventil (3) und ein Sperrelement (23), insbesondere für einen Heizkörper oder andere Klima- bzw. Heizgeräte, wobei der Steuer- bzw. Regelkopf (2) einen röhrenförmigen Abschnitt (9) und einen Sitz (10) aufweist, der in dem röhrenförmigen Abschnitt (9) gebildet ist; das Thermostatventil (3) einen Ventilabschnitt (27) aufweist, der entlang einer Achse (A) innerhalb des Sitzes (10) einführbar ist; und das Sperrelement (23) entlang der Achse (A) beweglich ist, um den Ventilabschnitt (27) innerhalb des Sitzes (10) zu greifen, und von einem Ring (24) definiert bzw. abgegrenzt ist, der befestigt ist, indem er axial auf die Außenseite des röhrenförmigen Abschnitts (9) geschoben wurde; wobei das Sperrelement (23) bereitgestellt ist, um den Ventilabschnitt (27) innerhalb des Sitzes (10) zu sichern; wobei die Vorrichtung **dadurch gekennzeichnet ist, dass** der röhrenförmige Abschnitt (9) mit einem Sperrsitz (22) versehen ist, der von mindestens einem umlaufenden, radialen äußeren Vorsprung (21) definiert bzw. abgegrenzt ist, der an einer äußeren Seitenfläche (16) des röhrenförmigen Abschnitts (9) gebildet ist, und **dadurch**, dass der Ring (24) entlang der Achse (A) nach dem Vorsprung (21) beweglich ist, um in den Sperrsitz (22) einzuklinken.

2. Vorrichtung nach Anspruch 1, **dadurch gekennzeichnet, dass** der röhrenförmige Abschnitt (9) eine Anzahl an Längsarmen (11) umfasst, die von einem Ende (7) des Steuer- bzw. Regelkopfes (2) vorragen und durch Schlitze (12) getrennt sind.

3. Vorrichtung nach Anspruch 2, **dadurch gekennzeichnet, dass** die Arme (11) in einem Ring parallel zur Achse (A) angeordnet sind und entsprechende separate gewölbte Abschnitte (13) einer Wand (14) bilden, die den Sitz (10) definiert bzw. abgrenzt.

4. Vorrichtung nach einem der vorangegangenen Ansprüche, **dadurch gekennzeichnet, dass** das Sperrelement (23) entlang der Achse (A) beweglich ist, um wahlweise eine Löse- bzw. Freigabestellung einzunehmen, in der sich das Sperrelement (23) außerhalb des Sperrsitzes (22) befindet und der Ventilabschnitt (27) frei innerhalb des Sitzes (10) gleiten kann, und eine Eingriffstellung, in der das Sperrelement (23) in den Sperrsitz (22) eingeführt und der Ventilabschnitt (27) am Sitz (10) gesichert ist.

5. Vorrichtung nach Anspruch 4, **dadurch gekennzeichnet, dass** der Ventilabschnitt (27) und der Sitz (10) entsprechende erste Elemente (30, 17) aufweisen, die miteinander kooperieren, um den Ventilabschnitt (27) axial innerhalb des Sitzes (10) zu sichern; wobei das Sperrelement (23) in der Eingriffstellung die ersten Elemente (30, 17) in einer Koppelposition hält, in der der Ventilabschnitt (27) axial am Sitz (10) gesichert ist.

6. Vorrichtung nach Anspruch 5, **dadurch gekennzeichnet, dass** die ersten Elemente eine Umfangsnut (30) umfassen, die an einer äußeren Seitenfläche (29) des Ventilabschnitts (27) gebildet ist, sowie einen Umfangszahn (17), der radial von einer inneren Seitenfläche (15) des Sitzes (10) vorragt, um in die Nut (30) einzurücken bzw. einzugreifen.

7. Vorrichtung nach einem der Ansprüche 4 bis 6, **dadurch gekennzeichnet, dass** der Ventilabschnitt (27) und der Sitz (10) entsprechende zweite Elemente (31, 18) aufweisen, die miteinander kooperieren, um den Ventilabschnitt (27) innerhalb des Sitzes (10) winklig bzw. eckig zu sperren; wobei das Sperrelement (23) in der Eingriffsstellung die zweiten Elemente (31, 18) in einer Koppelposition hält, in der der Ventilabschnitt (27) winklig bzw. eckig am Sitz (10) gesichert ist.

8. Vorrichtung nach Anspruch 7, **dadurch gekennzeichnet, dass** die zweiten Elemente Längsrippen bzw. -rillen (18) umfassen, die von einer inneren Seitenfläche (15) des Sitzes (10) vorragen, um in entsprechende Längsnuten (31) einzurücken, die an einer äußeren Seitenfläche (29) des Ventilabschnitts (27) gebildet sind.

## Revendications

1. Dispositif (1) comprenant une tête de commande (2), une vanne thermostatique (3) et un élément de blocage (23), en particulier pour un radiateur ou autre appareil de conditionnement d'air ou de chauffage, la tête de commande (2) ayant une partie tubulaire (9) et un siège (10) formé dans la partie tubulaire (9) ; la vanne thermostatique (3) ayant une partie de vanne (27) pouvant être insérée le long d'un axe (A) à l'intérieur du siège (10), et l'élément de blocage (23) étant mobile le long dudit axe (A) pour saisir la partie de vanne (27) à l'intérieur du siège (10) et défini par une bague (24) montée d'une manière axialement coulissante vers l'extérieur de ladite partie tubulaire (9) ; l'élément de blocage (23) étant prévu pour fixer la partie de vanne (27) à l'intérieur du siège (10) ; le dispositif étant **caractérisé en ce que** la partie tubulaire (9) est prévue avec un siège de retenue (22) défini par au moins une saillie circonférentielle radialement externe (21) formée sur une surface latérale externe (16) de ladite partie tubulaire (9), et **en ce que** la bague (24) est mobile le long de l'axe (A) au-delà de la saillie (21) pour s'encliqueter dans le siège de retenue (22).

2. Dispositif selon la revendication 1, **caractérisé en ce que** la partie tubulaire (9) comprend un certain nombre de bras longitudinaux (11) faisant saillie à partir d'une extrémité (7) de la tête de commande (2) et séparés par des fentes (12).

3. Dispositif selon la revendication 2, **caractérisé en ce que** lesdits bras (11) sont agencés dans une bague parallèle audit axe (A) et forment des parties incurvées séparées (13) respectives d'une paroi (14) définissant ledit siège (10).

4. Dispositif selon l'une des revendications précédentes, **caractérisé en ce que** ledit élément de blocage (23) est mobile le long dudit axe (A) pour prendre sélectivement une position de déblocage, dans laquelle l'élément de blocage (23) est à l'extérieur du siège de retenue (22) et la partie de vanne (27) peut coulisser librement à l'intérieur du siège (10), et une position de mise en prise dans laquelle l'élément de blocage (23) est inséré à l'intérieur du siège de retenue (22) et la partie de vanne (27) est fixée sur le siège (10).

5. Dispositif selon la revendication 4, **caractérisé en ce que** ladite partie de vanne (27) et ledit siège (10) ont des premiers éléments (30, 17) respectifs coopérant pour fixer la partie de vanne (27) axialement à l'intérieur du siège (10) ; dans ladite position de mise en prise, l'élément de blocage (23) maintenant lesdits premiers éléments (30, 17) dans une position couplée dans laquelle la partie de vanne (27) est fixée de manière axiale au siège (10).

6. Dispositif selon la revendication 5, **caractérisé en ce que** lesdits premiers éléments comprennent une rainure circonférentielle (30) formée sur une surface latérale externe (29) de la partie de vanne (27) ; et une dent circonférentielle (17) faisant saillie radialement à partir d'une surface latérale interne (15) du siège (10) pour mettre en prise ladite rainure (30).

7. Dispositif selon l'une des revendications 4 à 6, **caractérisé en ce que** ladite partie de vanne (27) et ledit siège (10) ont des seconds éléments (31, 18) respectifs coopérant pour bloquer la partie de vanne (27) de manière angulaire à l'intérieur du siège (10) ; dans ladite position de mise en prise, l'élément de blocage (23) maintenant lesdits seconds éléments (31, 18) dans une position couplée dans laquelle la partie de vanne (27) est fixée de manière angulaire au siège (10).

8. Dispositif selon la revendication 7, **caractérisé en ce que** lesdits seconds éléments comprennent des nervures longitudinales (18) faisant saillie à partir d'une surface latérale interne (15) du siège (10) pour mettre en prise des nervures longitudinales (31) respectives formées sur une surface latérale externe (29) de la partie de vanne (27).
